# EUROPÄISCHE PATENTSCHRIFT

(11) **EP 0 716 952 B1**
(45) Veröffentlichungstag und Bekanntmachung des Hinweises auf die Patenterteilung: **21.10.1998**
(21) Anmeldenummer: 95118694.9
(22) Anmeldetag: 24.11.1995
(51) Int. Cl.: B60N 3/10

(54) **Halter für einen Getränkebehälter**
Holder for beverage containers
Support pour récipients de boisson

(30) Priorität: 16.12.1994 DE 4444955
(43) Veröffentlichungstag der Anmeldung: 19.06.1996
(73) Patentinhaber: fischerwerke Artur Fischer GmbH & Co. KG, D-72178 Waldachtal (DE)
(72) Erfinder: Fischer, Heinz, D-72178 Waldachtal (DE); Nienhaus, Ulrich, D-72202 Nagold (DE); Schenk, Bernd, D-72160 Horb (DE)

(56) Entgegenhaltungen:
- DE-A- 4 423 097
- DE-C- 4 429 515
- DE-U- 9 420 483
- US-A- 4 783 037
- US-A- 5 072 989
- US-A- 5 330 146
- PATENT ABSTRACTS OF JAPAN vol. 018, no. 206 (M-1591), 12.April 1994 & JP-A-06 008768 (NISSAN MOTOR CO LTD), 18.Januar 1994,

## Beschreibung

Die Erfindung betrifft einen Halter für Getränkebehälter, wie Tassen, Becher oder Getränkedosen, der zum Einbau in einem Kraftwagen vorgesehen ist, mit den Merkmalen des Oberbegriffs des Anspruchs 1.

Aus der US-A-49 53 771 ist ein derartiger Halter bekannt. Der bekannte Halter ist zum Anbringen in einem Armaturenbrett eines Kraftwagens vorgesehen. Wird er nicht benutzt, so kann er im Armaturenbrett versenkt werden, seine Stirnfläche schließt dann bündig mit dem Armaturenbrett ab und lediglich ein Griff steht in den Fahrgastraum hinein ab.

Der bekannte Halter weist einen Schieber auf, der aus dem Armaturenbrett wie eine Schublade in eine geöffnete Stellung ausziehbar ist, wobei ein rückwärtiger Teil des Schiebers stets im Armaturenbrett geführt verbleibt. An dem Schieber sind zwei Schwenkarme angebracht, die von einer gemeinsamen Feder voneinander weg seitlich nach außen verschwenkt werden, wenn der Schieber geöffnet wird. Ein vorderer Bereich der Schwenkarme ist kreisbogenförmig geschwungen. Er bildet, wenn die Schwenkarme herausgeschwenkt sind, mit einer kreisbogenförmigen Ausnehmung des Schiebers eine Einstellöffnung für jeweils einen Getränkebehälter.

Wird der Schieber in das Armaturenbrett hineingeschoben, so kommen die Schwenkarme in Anlage an einem Seitenrand einer den Schieber aufnehmenden Öffnung im Armaturenbrett und werden nach innen gedrückt, so daß sie seitlich nicht über den Schieber hervorstehen. Die Schwenkarme werden zusammen mit dem Schieber im Armaturenbrett versenkt. Durch die seitliche Verschwenkbarkeit der Schwenkarme wird die für den Halter notwendige Einbaubreite verkleinert.

Um in den bekannten Halter unterschiedliche Tassen und Becher sowie Getränkedosen einstellen zu können, weist dieser eine Stütze auf, die schwenkbar am Schieber gelagert ist und beim Herausziehen des Schiebers durch Federkraft unterstützt aufgrund ihrer Gewichtskraft nach unten schwenkt. Beim Einschieben des Schiebers in das Armaturenbrett gelangt die Stütze in Anlage an einem unteren Rand der Öffnung für den Schieber im Armaturenbrett und wird nach oben verschwenkt. Auf diese Weise wird die für den bekannten Halter notwendige Einbauhöhe verringert.

Von Nachteil bei dem bekannten Halter ist, daß die Breite seiner Stütze durch die Einbaubreite des Halters begrenzt ist, die Stütze ragt nur ein Stück unter einen in den Halter eingestellten Getränkebehälter. Die Abstützung eines in den Halter eingestellten Getränkebehälters ist deswegen vom jeweiligen Getränkebehälter, insbesondere von dessen Durchmesser abhängig und nicht in jedem Fall ausreichend sicher. Bei Erschütterungen des Kraftwagens oder durch unaufmerksames Einstellen des Getränkebehälters in den Halter beispielsweise während der Fahrt kann der Getränkebehälter herabfallen.

Es ist Aufgabe der Erfindung, einen Halter der eingangs genannten Art so weiterzubilden, daß eingestellte Getränkebehälter unterschiedlicher Form und Größe, insbesondere verschiedenen Durchmessers bzw. Querabmessung, sicher gehalten werden.

Diese Aufgabe wird gelöst durch die Merkmale des Anspruchs 1. Durch die zusammen mit dem Schwenkarm um einen kleineren Winkel als dieser seitlich herausschwenkende Stütze wird eine zentrale und damit sichere Abstützung der Bodenpartie eines eingestellten Getränkebehälters erzielt. Beim erfindungsgemäßen Halter kann die Stütze großflächig ausgeführt werden, um stets eine zuverlässige Abstützung eines eingestellten Getränkebehälters zu gewährleisten. Auch ein Getränkebehälter kleinen Durchmessers, der in der Einstellöffnung seitlichen Bewegungsspielraum hat, steht unabhängig von seiner Lage in der Einstellöffnung sicher auf der Stütze auf.

Bei Ausführungsformen der Erfindung bewegt ein Federelement den Schieber in seine geöffnete Stellung, nachdem er durch Betätigen einer Taste oder dgl. entriegelt worden ist. Das Einschieben erfolgt gegen die Kraft der Feder. Als Federelement eignen sich insbesondere Zug- oder Druckfedern. Bei einer vorteilhaften Ausgestaltung der Erfindung ist das Federelement eine Rollfeder. Dies ist ein bandförmiges Federelement, dessen eines Ende sich aufgrund seiner Elastizität zu einem Wickel aufrollt und dadurch eine Zugkraft verursacht. Eine Rollfeder hat den Vorteil, daß ihre Federkraft über den gesamten Federweg nahezu konstant ist.

Mit einem ansich bekannten Flüssigkeitsdämpfungselement wird bei Ausführungsformen der Erfindung die Öffnungsbewegung des Schiebers gedämpft.

Bei einer bevorzugten Ausgestaltung der Erfindung wird der Schwenkarm mittels eines Federelements seitlich herausgeschwenkt.

Die Stütze des erfindungsgemäßen Halters wird in seitlicher Richtung vorzugsweise von dessen Schieber zwangsgeführt und schwenkt dadurch beim Ausziehen des Schiebers zusammen mit dem Schwenkarm seitlich heraus und beim Einschieben des Schiebers wieder zurück. Der Schwenkwinkel der Stütze ist kleiner als der Schwenkwinkel des Schwenkarms. Bevorzugt ist der Schwenkwinkel der Stütze halb so groß wie derjenige des Schwenkarms, so daß sich die ausgeschwenkte Stütze zentral unterhalb der Einstellöffnung befindet.

In bevorzugter Ausgestaltung ist der erfindungsgemäße Halter zum Einstellen zweier Getränkebehälter nebeneinander vorgesehen. Dazu weist er zwei Schwenkarme sowie zwei Stützen auf, die voneinander weg an beiden Seiten des Schiebers herausschwenken, wenn der Schieber ausgezogen wird.

Bei einer bevorzugten Ausgestaltung der Erfindung weist der Halter ein Gehäuse auf, in welchem der Schieber mit den Schwenkarmen und den Stützen ausziehbar untergebracht ist. Dadurch erhält man eine komplette Baueinheit, die sich in einer Öffnung beispielsweise im Armaturenbrett, in einer Türverkleidung oder einer Armstütze eines Kraftwagens einbauen läßt.

Die Erfindung wird nachfolgend anhand eines in der Zeichnung dargestellten Ausführungsbeispiels näher erläutert. Es zeigen:
- Figur 1: eine perspektivische Darstellung eines erfindungsgemäßen Halters, der in einem Armaturenbrett eines Kraftwagens angebracht ist;
- Figur 2: eine perspektivische Darstellung eines Schiebers des erfindungsgemäßen Halters aus Figur 1 mit ausgeschwenkten Schwenkarmen und Stützen;
- Figur 3: den Schieber aus Figur 2 mit eingeschwenkten Schwenkarmen und Stützen;
- Figur 4: eine Ansicht des Schiebers gemäß Figur 2 von unten; und
- Figur 5: eine Ansicht des Schiebers gemäß Figur 3 von unten.

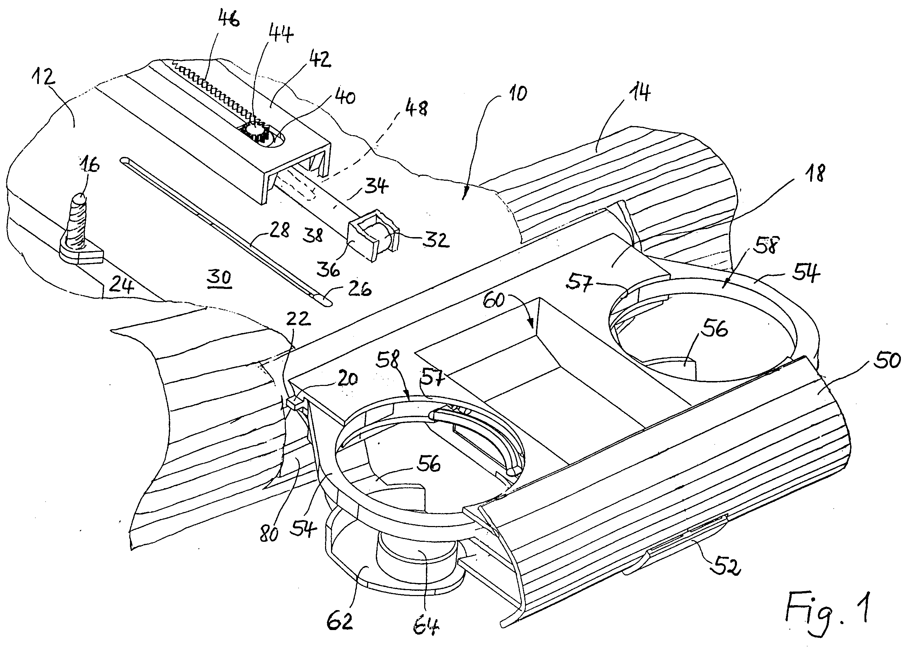

Der in Figur 1 dargestellte, erfindungsgemäße, insgesamt mit 10 bezeichnete Halter weist ein flaches Gehäuse 12 auf, das in ein andeutungsweise dargestelltes Armaturenbrett 14 eines Kraftwagens eingebaut ist. Das Gehäuse 12 ist ein Spritzgußteil aus Kunststoff. Es ist mit Schrauben 16, von denen in Figur 1 nur eine sichtbar ist, im Innern des Armaturenbretts 14 verschraubt.

Ein Schieber 18, der ebenfalls als Spritzgußteil aus Kunststoff hergestellt ist, ist nach Art einer Schublade ausziehbar im Gehäuse 12 geführt. Er weist zu diesem Zweck zwei seitlich abstehende Gleitschienen 20 auf, welche in Gleitnuten 22 in Seitenwänden 24 des Gehäuses 12 gelagert sind.

Um die Auszuglänge des Schiebers 18 zu begrenzen, weist er zwei von seiner Oberseite abstehende Noppen 26 auf, die in beidseitig geschlossene Längsschlitze 28 in einer oberen Wand 30 eingreifen und die den Verschiebeweg des Schiebers begrenzen (in Figur 1 ist nur eine linke Noppe 26 in einem linken Längsschlitz 28 zu sehen).

Ein Wickel 32 einer Rollfeder 34, die aus einem Blechstreifen besteht, ist in einer mit dem Gehäuse 12 einstückigen Aufnahme 36 auf dessen oberer Wand 30 aufgenommen. Ein abgewickeltes Bandende 38 der Rollfeder 34 erstreckt sich durch einen in der Zeichnung nicht sichtbaren Schlitz in der Aufnahme 36 hindurch über die obere Wand 30 des Gehäuses 12 bis zu einem Flüssigkeitsdämpfungselement 40, das durch einen Längsschlitz 48 in der oberen Wand 30 des Gehäuses 12 hindurch greift und mit dem Schieber 18 in Eingriff steht. Die Rollfeder 34 zieht den Schieber 18 in eine ausgezogene, in Figur 1 dargestellte Stellung aus dem Gehäuse 12 heraus.

Das Flüssigkeitsdämpfungselement 40 ist in einer tunnelartigen Längsführung 42 auf der oberen Wand 30 des Gehäuses 12 geführt. Ein Zahnrad 44 auf einer flüssigkeitsgedämpften Welle des Flüssigkeitsdämpfungselements 40 steht in Eingriff mit einer Zahnstange 46 der Längsführung 42 und dämpft auf diese Weise die Bewegung des Schiebers 18.

An einer Frontseite des Schiebers 18 ist eine Blende 50 angebracht, welche bei in das Gehäuse 12 eingeschobenem Schieber 18 bündig mit dem Armaturenbrett 14 abschließt. Mittels einer Taste 52, die in der Blende 50 angeordnet ist, läßt sich der Schieber 18 entriegeln und wird von der Rollfeder 34 aus dem Gehäuse 12 und dem Armaturenbrett 14 herausgeschoben in die in Figur 1 dargestellte, geöffnete Stellung.

Am Schieber 18 sind zwei Schwenkarme 54 gelagert, die bei geöffnetem Schieber 18 seitlich aus diesem herausgeschwenkt sind. Ein vorderer Bereich der Schwenkarme 54 ist kreisbogenförmig ausgebildet. Zusammen mit kreisrunden Ausschnitten 57 im Schieber 18 bildet er je eine Einstellöffnung 58 für Getränkebehälter. Zwischen den Einstellöffnungen 58 weist der Schieber 18 ein muldenförmiges Ablagefach 60 auf.

Des weiteren sind am Schieber 18 zwei Stützen 56 schwenkbar gelagert, die bei ausgezogenem Schieber 18 nach unten und zur Seite nach außen verschwenkt sind. Durch das Herausschwenken der Stützen 56 gelangt eine Stellfläche 62 jeder Stütze 56 ins Zentrum unterhalb der jeweiligen Einstellöffnung 58. Auf den Stellflächen 62 befindet sich eine kreisrunde Erhöhung 64, auf der ein in den erfindungsgemäßen Halter 10 eingestellter Getränkebehälter steht.

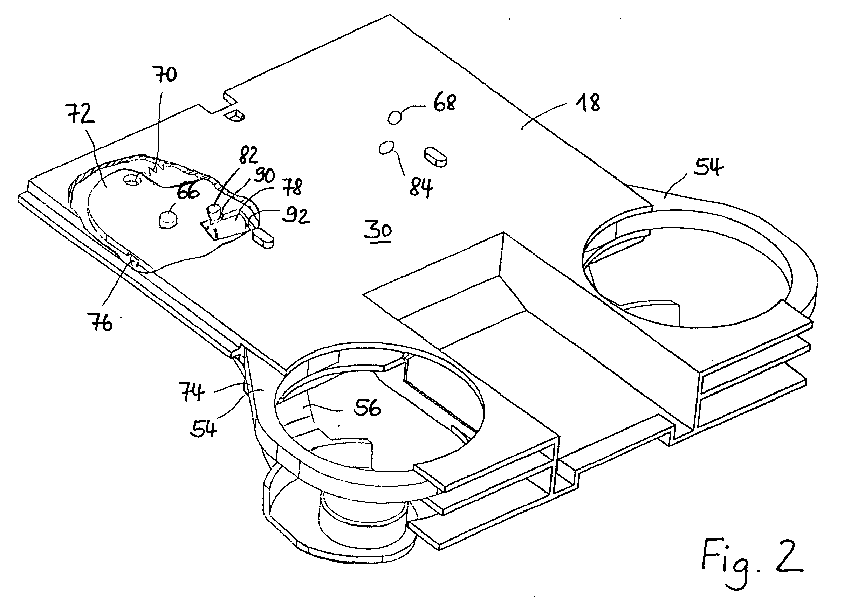

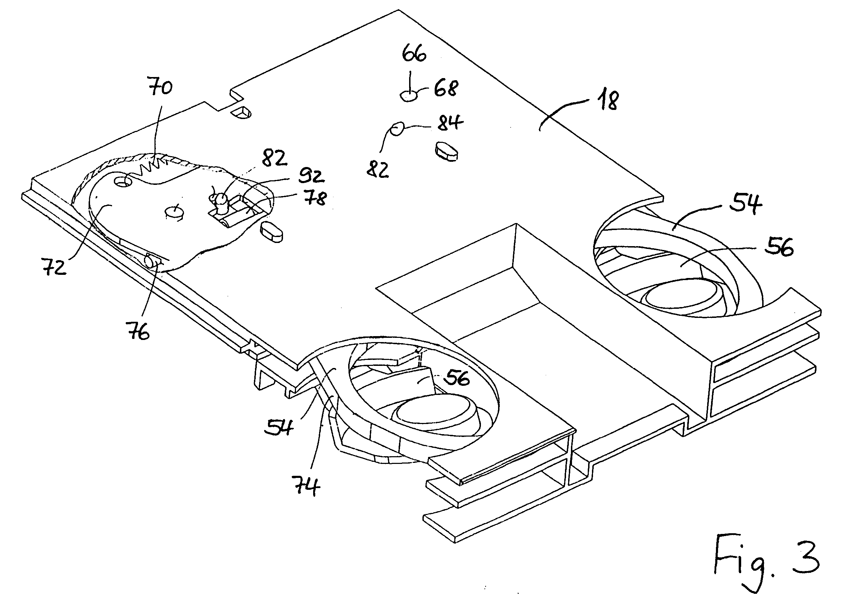

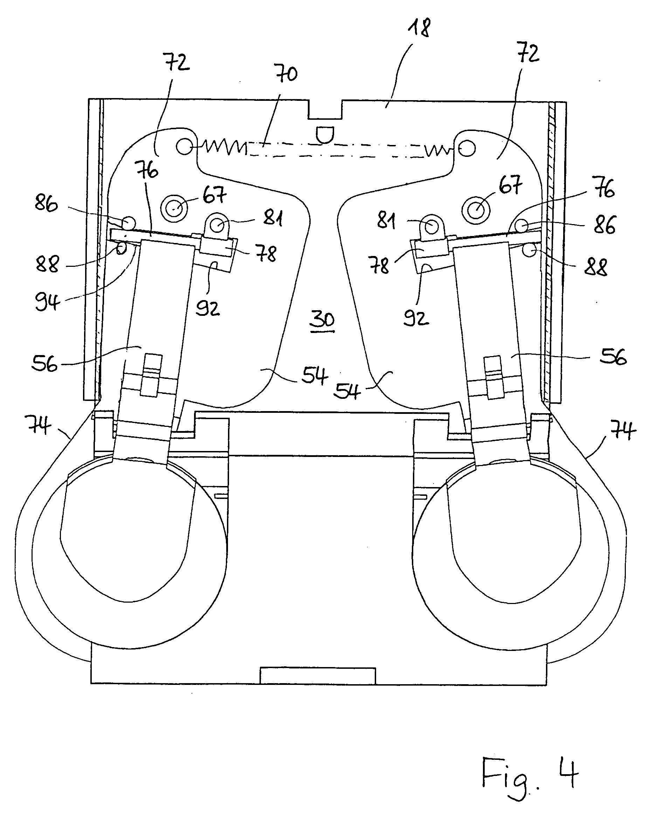

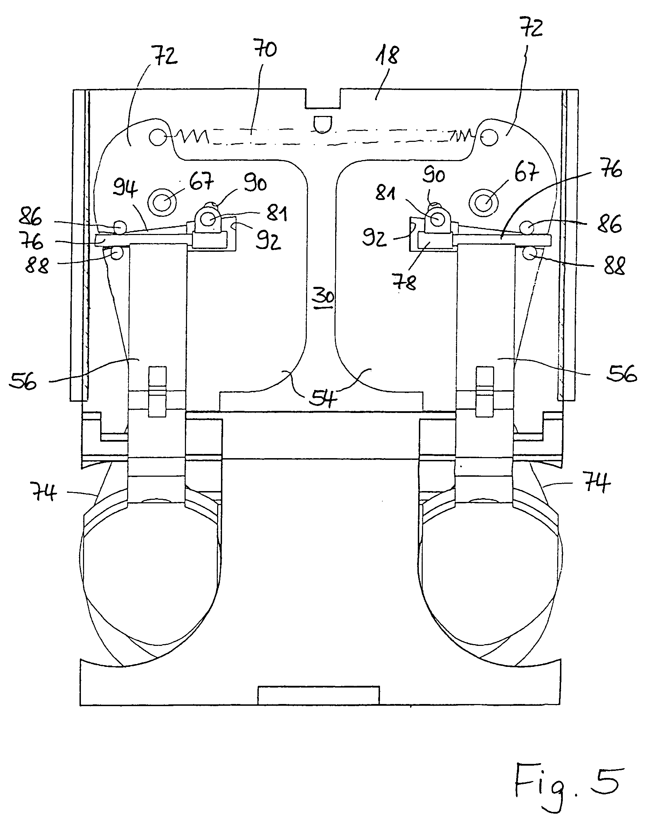

Der Verschwenkmechanismus des erfindungsgemäßen Halters 10 wird nachfolgend anhand der Figuren 2 bis 5 beschrieben, wobei die Schwenkarme 54 in Figuren 2 und 4 herausgeschwenkt und die Stützen 56 nach unten und außen verschwenkt sind. In Figuren 3 und 5 sind die Schwenkarme 54 nach innen und die Stützen 56 nach oben und innen geschwenkt. In Figuren 4 und 5 ist eine untere Wand des Schiebers 18 weggelassen.

Die Schwenkarme 54 reichen bis in einen rückwärtigen Bereich des Schiebers 18, wo sie mit einem nach unten und einem nach oben abstehenden Achszapfen 66, 67 schwenkbar gelagert sind, die in Bohrungen 68 eingreifen, welche in der oberen Wand 30 und in der unteren Wand des Schiebers 18 angebracht sind. Eine Schraubenzugfeder 70 zieht hintere Enden 72 der Schwenkarme 54 zusammen und bewirkt dadurch, daß der vordere Teil der Schwenkarme 54 zur Seite aus dem Schieber 18 heraus schwenkt. Beim Einschieben des Schiebers 18 gelangen Schrägflächen 74 an Außenseiten der Schwenkarme 54 in Anlage an die Seitenwände 24 des Gehäuses 12 (Figur 1) und werden dadurch nach innen verschwenkt. Sie stehen in dieser Stellung seitlich nicht über den Schieber 18 vor (Figur 5).

Die Stützen 56 sind um eine vertikale und um eine horizontale Achse schwenkbar im Schieber 18 gelagert: Sie weisen im rückwärtigen Bereich des Schiebers 18 eine horizontal angeordnete, in etwa quer zum Schieber 18 und den Schwenkarmen 54 verlaufende Schwenkwelle 76 auf. Ein in Richtung der Innenseite des Schiebers 18 weisendes Ende der Schwenkwelle 76 ist in einem Lagerschuh 78 gelagert, der eine Schwenkbewegung der Stützen 56 aus der in Figur 3 dargestellten oberen Stellung in die in Figuren 1 und 2 dargestellte untere Stellung ermöglicht. Die Stützen 56 schwenken aufgrund ihrer Gewichtskraft nach unten. Sie liegen auf einem unteren Rand 80 (Figur 1) des Gehäuses 12 auf, der ihre Schwenkbewegung nach unten begrenzt und der sie beim Einschieben des Schiebers 18 in das Gehäuse 12 nach oben drückt.

Zur in seitlicher Richtung schwenkbaren Lagerung der Stützen 56 weist der Lagerschuh 78 einen nach unten und einen nach oben abstehenden Zapfen 81, 82 auf, der in eine Bohrung 84 in der oberen Wand 30 und in eine achsgleiche, nicht sichtbare Bohrung in der unteren Wand des Schiebers 18 eingreift. Ein dem Lagerschuh 78 abgewandtes Ende der Schwenkwelle 76 ist zwischen zwei Zapfen 86, 88 (Figuren 4 und 5) gehalten. Dieses Schwenkwellenende wird bei der Schwenkbewegung des Schwenkarms 54 mitbewegt, wodurch die Stützen 56 zu ihrer seitlichen Schwenkbewegung angetrieben werden. Durch die Anordnung der Schwenkzapfen 81, 82 der Stützen 56 in Bezug auf die Achszapfen 66, 67 der Schwenkarme 54 und der die Schwenkwelle 76 antreibenden Mitnehmerzapfen 86, 88 der Schwenkarme 54 ist der Schwenkwinkel der Stützen 56 halb so groß wie der Schwenkwinkel der Schwenkarme 54.

Die Schwenkarme 54 weisen eine auf einem Kreisbogen (mit dem Schwenkzapfen 66 als Mittelpunkt) verlaufende, kurze Ausnehmung 90 auf, durch welche der obere Schwenkzapfen 82 der Stütze 56 hindurchtritt. Diese Ausnehmung 90 ermöglicht die Schwenkbewegung des Schwenkarms 54 gegenüber dem im Schieber 18 gelagerten Schwenkzapfen 82 der Stützen 56. Die Aussparung 90 geht in eine größere Aussparung 92 über, in welcher der Lagerschuh 78 Platz findet. Eine querverlaufende Nut 94 in der Unterseite der Schwenkarme 54 bietet Raum für die Schwenkachse 76 der Stützen 56.

## Patentansprüche

1. Halter für Getränkebehälter in einem Kraftwagen, mit einem schubladenartig aus einer geschlossenen in eine offene Stellung verschiebbaren Schieber (18), an dem ein Schwenkarm (54), der beim Ausziehen des Schiebers teilweise seitlich über den Schieber vorstehend herausschwenkt und dadurch zusammen mit dem Schieber eine Einstellöffnung für den Getränkebehälter bildet, sowie eine Stütze (56) für den Getränkebehälter, die beim Ausziehen des Schiebers nach unten schwenkt, gelagert sind, **dadurch gekennzeichnet**, daß die Stütze (56) beim Ausziehen seitlich um einen Winkel nach außen schwenkt, der kleiner ist, als der Schwenkwinkel des Schwenkarms (54).

2. Halter nach Anspruch 1, **dadurch gekennzeichnet**, daß der Schieber (18) von einem Federelement (34) in die geöffnete Stellung verschoben wird.

3. Halter nach Anspruch 2, **dadurch gekennzeichnet**, daß das Federelement eine Rollfeder (34) ist.

4. Halter nach Anspruch 1, **dadurch gekennzeichnet**, daß der Halter (10) ein Flüssigkeitsdämpfungselement (40) aufweist, das die Öffnungsbewegung des Schiebers (18) dämpft.

5. Halter nach Anpruch 1, **dadurch gekennzeichnet**, daß der Schwenkarm (54) von einem Federelement (70) herausgeschwenkt wird.

6. Halter nach Anspruch 1, **dadurch gekennzeichnet**, daß die Stütze (56) von dem Schieber (18) zwangsgeführt seitlich verschwenkt wird.

7. Halter nach Anspruch 1, **dadurch gekennzeichnet**, daß die Stütze (56) starr mit einer Schwenkwelle (76) verbunden ist, die über am Schwenkarm angeordnete Mitnehmerzapfen (86, 88) und in einem Abstand zu Achszapfen (66, 67) des Schwenkarms (54) angeordnete Schwenkzapfen (81, 82) relativ zum Schwenkarm (54) verschwenkbar ist.

8. Halter nach Anspruch 7, **dadurch gekennzeichnet**, daß die Stütze (56) um den halben Schwenkwinkel des Schwenkarms (54) verschwenkt.

9. Halter nach Anspruch 1, **dadurch gekennzeichnet**, daß der Halter (10) zwei gegengleich schwenkbare Schwenkarme (54) sowie zwei je einem Schwenkarm (54) zugeordnete Stützen (56) aufweist.

10. Halter nach Anspruch 1, **dadurch gekennzeichnet**, daß der Schieber (18) in einem Gehäuse (12) ausziehbar gelagert ist, das zum Einbau in das Kraftfahrzeug vorgesehen ist.

## Claims

1. Holder for drinks containers in a motor vehicle, having a slider member (18) which can be moved from a closed position into an open position like a drawer, and on which are mounted a pivot arm (54), which when the slider member is pulled out, pivots out, projecting partially laterally beyond the slider member, and thereby forms, together with the slider member, an insertion opening for the drinks container, and also a support (56) for the drinks container, which support pivots downwards when the slider member is pulled out, **characterized in that** the support (56), on being pulled out, pivots outwards laterally through an angle which is smaller than the pivot angle of the pivot arm (54).

2. Holder according to Claim 1, **characterized in that** the slider member (18) is pushed into the open position by a spring element (34).

3. Holder according to Claim 2, **characterized in that** the spring element is a scroll spring (34).

4. Holder according to Claim 1, **characterized in that** the holder (10) has a fluid damping element (40) which damps the opening movement of the slider member (18).

5. Holder according to Claim 1, **characterized in that** the pivot arm (54) is pivoted out by a spring element (70).

6. Holder according to Claim 1, **characterized in that** the support (56) is pivoted laterally, forcibly guided by the slider member (18).

7. Holder according to Claim 1, **characterized in that** the support (56) is rigidly connected to a pivot shaft (76) which, by way of driver pegs (86, 88) arranged on the pivot arm, and pivot pins (81, 82) arranged at a distance from trunnions (66, 67) of the pivot arm (54), is pivotable relative to the pivot arm (54).

8. Holder according to Claim 7, **characterized in that** the support (56) pivots through half the pivot angle of the pivot arm (54).

9. Holder according to Claim 1, **characterized in that** the holder (10) has two pivot arms (54) pivotable in diametrically opposite directions, and also two supports (56) each associated with a pivot arm (54).

10. Holder according to Claim 1, **characterized in that** the slider member (18) is mounted, so as to be able to be pulled out, in a housing (12) which is provided for installation in the motor vehicle.

## Revendications

1. Support pour des récipients pour boisson dans un véhicule automobile, comportant un élément coulissant (18) qui peut coulisser, à la façon d'un tiroir, pour passer d'une position fermée à une position ouverte, sur lequel sont portés un bras pivotant (54) qui, lorsque l'on tire le tiroir, pivote vers l'extérieur en dépassant partiellement latéralement au delà du tiroir et, de ce fait, offre, avec le tiroir, une ouverture de pose pour le récipient pour boisson, ainsi que, pour le récipient pour boisson, un soutien (56) qui, lorsque l'on tire le tiroir, pivote vers le bas, **caractérisé par le fait que,** lorsque l'on tire le tiroir, le soutien (56) pivote latéralement vers l'extérieur d'un angle qui est inférieur à l'angle de pivotement du bras pivotant (54).

2. Support selon la revendication 1, **caractérisé par le fait que** le tiroir (18) est tiré en position ouverte par un élément élastique (34).

3. Support selon la revendication 2, **caractérisé par le fait que** l'élément élastique est un ressort bobiné développable (34).

4. Support selon la revendication 1, **caractérisé par le fait que** le support (10) présente un élément amortisseur à liquide (40) qui amortit le mouvement d'ouverture du tiroir (18).

5. Support selon la revendication 1, **caractérisé par le fait que** le bras pivotant (54) pivote vers l'extérieur sous l'action d'un élément élastique (70).

6. Support selon la revendication 1, **caractérisé par le fait que** le soutien (56) pivote latéralement, guidé à force par le tiroir (18).

7. Support selon la revendication 1, **caractérisé par le fait que** le soutien (56) est rigidement lié à un arbre pivotant (76) qui peut pivoter par rapport au bras pivotant (54) au moyen de tétons entraîneurs (86, 88) disposés sur le bras pivotant et de tourillons (81, 82) disposés à une certaine distance des tourillons (66, 67) du bras pivotant (54).

8. Support selon la revendication 7, **caractérisé par le fait que** le soutien (56) pivote d'un angle de pivotement moitié de celui du bras pivotant (54).

9. Support selon la revendication 1, **caractérisé par le fait que** le support (10) présente deux bras pivotants (54) qui peuvent pivoter en opposition, ainsi que deux soutiens (56) correspondant chacun à un bras pivotant (54).

10. Support selon la revendication 1, **caractérisé par le fait que** le tiroir (18) est porté, avec possibilité de l'en sortir, dans un boîtier (12) prévu pour montage dans le véhicule automobile.
